# EUROPÄISCHE PATENTSCHRIFT

(11) **EP 2 831 946 B1**
(45) Veröffentlichungstag und Bekanntmachung des Hinweises auf die Patenterteilung: **01.06.2016**
(21) Anmeldenummer: 13709198.9
(22) Anmeldetag: 13.03.2013
(51) Int. Cl.: H01M 10/60

(54) **VERFAHREN ZUM AUFHEIZEN VON ENERGIESPEICHERZELLEN EINER ENERGIESPEICHEREINRICHTUNG UND AUFHEIZBARE ENERGIESPEICHEREINRICHTUNG**
METHOD FOR HEATING ENERGY STORAGE CELLS OF AN ENERGY STORAGE SYSTEM, AND HEATABLE ENERGY STORAGE SYSTEM
PROCÉDÉ POUR CHAUFFER DES ÉLÉMENTS ACCUMULATEURS D'ÉNERGIE D'UN DISPOSITIF D'ACCUMULATION D'ÉNERGIE ET DISPOSITIF D'ACCUMULATION D'ÉNERGIE APTE À ÊTRE CHAUFFER

(30) Priorität: 29.03.2012 DE 102012205119
(43) Veröffentlichungstag der Anmeldung: 04.02.2015
(73) Patentinhaber: Robert Bosch GmbH, 70469 Stuttgart (DE); Samsung SDI Co., Ltd., Yongin-si Gyeonggi-do 446-577 (KR)
(72) Erfinder: FEUERSTACK, Peter, 71642 Ludwigsburg (DE); PARTES, Hans, 71679 Asperg (DE)
(74) Vertreter: Bee, Joachim
(86) Internationale Anmeldenummer: PCT/EP2013/055143
(87) Internationale Veröffentlichungsnummer: WO 2013/143853

(56) Entgegenhaltungen:
- DE-A1-102009 003 180
- JP-A- 2003 032 901
- US-A- 2 710 936

## Beschreibung

Die Erfindung betrifft Verfahren zum Aufheizen von Energiespeicherzellen einer Energiespeichereinrichtung und eine aufheizbare Energiespeichereinrichtung, insbesondere einer Energiespeichereinrichtung mit modularem Batteriesystem für ein elektrisch betriebenes Fahrzeug.

### Stand der Technik

Es zeichnet sich ab, dass in Zukunft sowohl bei stationären Anwendungen, wie z.B. Windkraftanlagen oder Solaranlagen, wie auch in Fahrzeugen, wie Hybrid- oder Elektrofahrzeugen, vermehrt elektronische Systeme zum Einsatz kommen, die neue Energiespeichertechnologien mit elektrischer Antriebstechnik kombinieren.

Die Einspeisung von mehrphasigem Strom in eine elektrische Maschine wird üblicherweise durch einen Umrichter in Form eines Pulswechselrichters bewerkstelligt. Dazu kann eine von einem Gleichspannungszwischenkreis bereitgestellte Gleichspannung in eine mehrphasige Wechselspannung, beispielsweise eine dreiphasige Wechselspannung umgerichtet werden. Der Gleichspannungszwischenkreis wird dabei von einem Strang aus seriell verschalteten Batteriemodulen gespeist. Um die für eine jeweilige Anwendung gegebenen Anforderungen an Leistung und Energie erfüllen zu können, werden häufig mehrere Batteriemodule in einer Traktionsbatterie in Serie geschaltet.

Die Serienschaltung mehrerer Batteriemodule bringt das Problem mit sich, dass der gesamte Strang ausfällt, wenn ein einziges Batteriemodul ausfällt. Ein solcher Ausfall des Energieversorgungsstrangs kann zu einem Ausfall des Gesamtsystems führen. Weiterhin können temporär oder permanent auftretende Leistungsminderungen eines einzelnen Batteriemoduls zu Leistungsminderungen im gesamten Energieversorgungsstrang führen.

In der Druckschrift US 5,642,275 A1 ist ein Batteriesystem mit integrierter Wechselrichterfunktion beschrieben. Systeme dieser Art sind unter dem Namen Multilevel Cascaded Inverter oder auch Battery Direct Inverter (Batteriedirektumrichter, BDI) bekannt. Solche Systeme umfassen Gleichstromquellen in mehreren Energiespeichermodulsträngen, welche direkt an eine elektrische Maschine oder ein elektrisches Netz anschließbar sind. Dabei können einphasige oder mehrphasige Versorgungsspannungen generiert werden. Die Energiespeichermodulstränge weisen dabei eine Mehrzahl von in Serie geschalteten Energiespeichermodulen auf, wobei jedes Energiespeichermodul mindestens eine Batteriezelle und eine zugeordnete steuerbare Koppeleinheit aufweist, welche es erlaubt, in Abhängigkeit von Steuersignalen den jeweiligen Energiespeichermodulstrang zu unterbrechen oder die jeweils zugeordnete mindestens eine Batteriezelle zu überbrücken oder die jeweils zugeordnete mindestens eine Batteriezelle in den jeweiligen Energiespeichermodulstrang zu schalten. Durch geeignete Ansteuerung der Koppeleinheiten, z.B. mit Hilfe von Pulsweitenmodulation, können auch geeignete Phasensignale zur Steuerung der Phasenausgangsspannung bereitgestellt werden, so dass auf einen separaten Pulswechselrichter verzichtet werden kann. Der zur Steuerung der Phasenausgangsspannung erforderliche Pulswechselrichter ist damit sozusagen in den BDI integriert.

BDIs weisen üblicherweise einen höheren Wirkungsgrad und eine höhere Ausfallsicherheit gegenüber herkömmlichen Systemen auf. Die Ausfallsicherheit wird unter anderem dadurch gewährleistet, dass defekte, ausgefallene oder nicht voll leistungsfähige Batteriezellen durch geeignete Überbrückungsansteuerung der Koppeleinheiten aus den Energieversorgungssträngen herausgeschaltet werden können. Die Phasenausgangsspannung eines Energiespeichermodulstrangs kann durch entsprechendes Ansteuern der Koppeleinheiten variiert und insbesondere stufig eingestellt werden. Die Stufung der Ausgangsspannung ergibt sich dabei aus der Spannung eines einzelnen Energiespeichermoduls, wobei die maximal mögliche Phasenausgangsspannung durch die Summe der Spannungen aller Energiespeichermodule eines Energiespeichermodulstrangs bestimmt wird.

Die Druckschriften DE 10 2010 027 857 A1 und DE 10 2010 027 861 A1 beispielsweise offenbaren Batteriedirektinverter mit mehreren Batteriemodulsträngen, welche direkt an eine elektrische Maschine anschließbar sind.

Die Energiespeichermodulstränge weisen dabei eine Mehrzahl von in Serie geschalteten Energiespeichermodulen auf, wobei jedes Energiespeichermodul mindestens eine Batteriezelle und eine zugeordnete steuerbare Koppeleinheit aufweist, welche es erlaubt, in Abhängigkeit von Steuersignalen die jeweils zugeordnete mindestens eine Batteriezelle zu überbrücken oder die jeweils zugeordnete mindestens eine Batteriezelle in den jeweiligen Energiespeichermodulstrang zu schalten. Optional kann die Koppeleinheit derart gestaltet sein, dass sie es zusätzlich erlaubt, die jeweils zugeordnete mindestens eine Batteriezelle auch mit inverser Polarität in den jeweiligen Energiespeichermodulstrang zu schalten oder auch den jeweiligen Energiespeichermodulstrang zu unterbrechen.

BDIs weisen üblicherweise einen höheren Wirkungsgrad und eine höhere Ausfallsicherheit gegenüber herkömmlichen Systemen auf. Die Ausfallsicherheit wird unter anderem dadurch gewährleistet, dass defekte, ausgefallene oder nicht voll leistungsfähige Batteriezellen durch geeignete Überbrückungsansteuerung der Koppeleinheiten aus dem jeweiligen Energieversorgungsstrang herausgeschaltet werden können. Die Gesamtausgangsspannung jedes Energiespeichermodulstrangs kann durch entsprechendes Ansteuern der Koppeleinheiten variiert und insbesondere stufig eingestellt werden. Die Stufung der Ausgangsspannung ergibt sich dabei aus der Spannung eines einzelnen Energiespeichermoduls, wobei die maximal mögliche Gesamtausgangsspannung durch die Summe der Spannungen aller Energiespeichermodule des Energiespeichermodulstrangs bestimmt wird.

Zur Einstellung einer Ausgangsspannung eines Energiespeichermoduls kann eine pulsbreitenmodulierte (PWM) Ansteuerung der Koppeleinheiten erfolgen. Dadurch ist es möglich, durch gezielte Variation der Ein- bzw. Ausschaltzeiten einen gewünschten Mittelwert als Energiespeichermodulspannung auszugeben.

Bei einem Einsatz in elektrisch betriebenen Fahrzeugen wie beispielsweise Elektroautos oder Hybridfahrzeugen kann es vorkommen, dass die Temperaturen der Batteriezellen solcher Energiespeichereinrichtungen sehr niedrig sind, zum Beispiel bei einem Starten des Fahrzeugs im Winter. Da typischerweise verwendete Batteriezellen einen temperaturabhängigen Innenwiderstand aufweisen, der mit sinkender Temperatur steigt, kann es sein, dass die Batteriezellen bei tiefen Temperaturen nicht die volle Leistung bereitstellen können.

Es besteht daher ein Bedarf nach einer Methode, die volle Leistungsfähigkeit der Batteriezellen auch bei tiefen Temperaturen gewährleisten zu können, ohne dass aufwändige Heizelemente oder ein zeit- und energieintensiver externer Heizprozess eingesetzt werden müssen.

### Offenbarung der Erfindung

Die vorliegende Erfindung schafft gemäß einem Aspekt ein Verfahren zum Aufheizen von Energiespeicherzellen einer Energiespeichereinrichtung, welche zum Erzeugen einer n-phasigen Versorgungsspannung ausgelegt ist, wobei n ≥ 2, und welche n parallel geschaltete Energieversorgungszweige aufweist, welche jeweils zwischen einen Ausgangsanschluss und eine Bezugspotentialschiene gekoppelt sind. Dabei weist jeder der Energieversorgungszweige eine Vielzahl von in Serie geschalteten Energiespeichermodulen aufweist, welche jeweils ein Energiespeicherzellenmodul, welches mindestens eine Energiespeicherzelle aufweist, und eine Koppeleinrichtung mit Koppelelementen umfassen, welche dazu ausgelegt sind, das Energiespeicherzellenmodul selektiv in den jeweiligen Energieversorgungszweig zu schalten oder zu überbrücken. Das Verfahren weist die Schritte des Verbindens der Ausgangsanschlüsse der Energiespeichereinrichtung mit Eingangsanschlüssen einer n-phasigen elektrischen Maschine und Koppelns der Ausgangsanschlüsse über den Sternpunkt der elektrischen Maschine, des Ansteuerns der Koppeleinrichtungen mindestens eines Energiespeichermoduls eines ersten Energieversorgungszweigs zum Schalten der jeweiligen Energiespeicherzellenmodule in den ersten Energieversorgungszweig, und des gleichzeitigen Ansteuerns der Koppeleinrichtungen mindestens eines Energiespeichermoduls eines zweiten Energieversorgungszweigs zum Schalten der jeweiligen Energiespeicherzellenmodule in den zweiten Energieversorgungszweig für eine erste vorbestimmte Zeitspanne auf.

Gemäß einem weiteren Aspekt schafft die vorliegende Erfindung ein System, mit einer n-phasigen elektrischen Maschine, wobei n ≥ 2, einer Energiespeichereinrichtung, welche zum Erzeugen einer n-phasigen Versorgungsspannung ausgelegt ist, und welche n parallel geschaltete Energieversorgungszweige aufweist, welche jeweils zwischen einen Ausgangsanschluss und eine Bezugspotentialschiene gekoppelt sind, wobei jeder der Energieversorgungszweige eine Vielzahl von in Serie geschalteten Energiespeichermodulen aufweist. Die Energiespeichermodule umfassen jeweils ein Energiespeicherzellenmodul, welches mindestens eine Energiespeicherzelle aufweist, und eine Koppeleinrichtung mit Koppelelementen, welche dazu ausgelegt sind, das Energiespeicherzellenmodul selektiv in den jeweiligen Energieversorgungszweig zu schalten oder zu überbrücken. Das System umfasst weiterhin n Phasenleitungen, welche jeweils einen der Ausgangsanschlüsse der Energiespeichereinrichtung mit jeweils einem von n Phasenanschlüssen der n-phasigen elektrischen Maschine koppeln, und eine

Steuereinrichtung, welche dazu ausgelegt ist, ein erfindungsgemäßes Verfahren durchzuführen.

### Vorteile der Erfindung

Es ist Idee der vorliegenden Erfindung, eine modular aufgebaute Energiespeichereinrichtung mit in mehreren Energieversorgungszweigen seriell verschalteten Batteriezellen durch hochfrequentes, wechselseitiges Transferieren von elektrischer Energie von einem Energieversorgungszweig in einen anderen Energieversorgungszweig aufzuheizen. Diese Strategie macht sich die Erkenntnis zunutze, dass durch das Transferieren von elektrischer Energie von einem Energieversorgungszweig in einen anderen Energieversorgungszweig Abwärme durch die Verlustleistung beim Speisen der Energiespeicherzellen entsteht, die die Energiespeicherzellen lokal aufheizen kann.

Dies hat den Vorteil, dass Energiespeicherzellen, die bei tiefen Temperaturen einen unerwünscht hohen Innenwiderstand aufweisen, ohne zusätzliche Heizmaßnahmen oder Heizkomponenten wieder auf eine Betriebstemperatur gebracht werden können, bei der die Energiespeicherzellen volle oder nahezu vollständige Leistungsfähigkeit aufweisen.

Ferner ist es vorteilhafterweise möglich, diese Ansteuerstrategie einer für den gewöhnlichen Betrieb der Energiespeichereinrichtung notwendigen Ansteuerstrategie zu überlagern, so dass ein Aufheizen der Energiespeicherzellen auch während eines Normalbetriebs der Energiespeichereinrichtung möglich ist. Das Umladen von Energiespeicherzellen bei ausreichend hoher Taktfrequenz bietet den Vorteil, dass in der elektrischen Maschine keine unerwünschten Drehmomente durch den Heizstrom auftreten.

Gemäß einer Ausführungsform des erfindungsgemäßen Verfahrens erfolgt weiterhin ein Ansteuern der Koppeleinrichtungen des mindestens einen Energiespeichermoduls des zweiten Energieversorgungszweigs zum Überbrücken der jeweiligen Energiespeicherzellenmodule in dem zweiten Energieversorgungszweig für eine zweite vorbestimmte Zeitspanne, nachdem die erste vorbestimmte Zeitspanne verstrichen ist. Dadurch kann vermieden werden, dass unerwünschte Drehmomente in der elektrischen Maschine auftreten.

Gemäß einer weiteren Ausführungsform des erfindungsgemäßen Verfahrens ist die erste vorbestimmte Zeitspanne kürzer als der Quotient aus Induktivität und Ohm'schen Widerstand der induktiven Komponenten der elektrischen Maschine. Dies birgt den Vorteil, dass in den induktiven Komponenten der elektrischen Maschine ein Zwischenspeichern der elektrischen Energie erfolgen kann, die von den Energiespeichermodulen des ersten Energieversorgungszweigs geliefert werden, und von dort wieder in die Energiespeichermodule des zweiten Energieversorgungszweigs eingespeist werden können.

Gemäß einer weiteren Ausführungsform des erfindungsgemäßen Verfahrens erfolgt weiterhin ein Auswählen des mindestens einen Energiespeichermoduls des ersten Energieversorgungszweigs und des mindestens einen Energiespeichermoduls des zweiten Energieversorgungszweigs zum Bereitstellen der n-phasigen Versorgungsspannung für die elektrische Maschine. Dies hat den Vorteil, dass für Betriebssituationen, in denen nur eine niedrige Eingangsspannung für die elektrische Maschine benötigt wird, nur ein Teil der Energiespeichermodule aufgeheizt werden muss. Diese aufgeheizten Energiespeichermodule können dann in solchen Betriebssituationen, beispielsweise beim Anfahren eines elektrisch betriebenen Fahrzeugs, für die Bereitstellung der Versorgungsspannung herangezogen werden, während die übrigen, noch nicht aufgeheizten Energiespeichermodule erst später aufgeheizt werden müssen.

Gemäß einer weiteren Ausführungsform des erfindungsgemäßen Verfahrens wird das Verfahren ausgeführt, wenn die Temperatur der Energiespeicherzellen einen ersten vorbestimmten Grenzwert unterschreitet. Besonders vorteilhaft ist dieses Vorgehen bei tiefen Temperaturen, bei denen der Innenwiderstand der Energiespeicherzellen besonders hoch ist.

Gemäß einer weiteren Ausführungsform des erfindungsgemäßen Verfahrens erfolgen die Schritte des Ansteuerns der Koppeleinrichtungen des mindestens einen Energiespeichermoduls des zweiten Energieversorgungszweigs zum Schalten der jeweiligen Energiespeicherzellenmodule in den zweiten Energieversorgungszweig und des Ansteuerns der Koppeleinrichtungen des mindestens einen Energiespeichermoduls des zweiten Energieversorgungszweigs zum Überbrücken der jeweiligen Energiespeicherzellenmodule in dem zweiten Energieversorgungszweig so lange alternierend, bis die Temperatur der Energiespeicherzellen der beteiligten Energiespeichermodule einen zweiten vorbestimmten Grenzwert überschreitet. Durch dieses hochfrequente Transferieren von elektrischer Energie zwischen Energiespeichermodulen kann durch die entstehende Verlustleistung so lange Wärme erzeugt werden, bis der Innenwiderstand der Energiespeicherzellen wieder ausreichend niedrig ist.

Gemäß einer Ausführungsform des erfindungsgemäßen Systems können die Koppeleinrichtungen Koppelelemente in Vollbrückenschaltung umfassen. Alternativ können die Koppeleinrichtungen Koppelelemente in Halbbrückenschaltung umfassen.

Gemäß einer weiteren Ausführungsform des erfindungsgemäßen Systems können die Energiespeicherzellen Lithium-Ionen-Akkumulatoren umfassen. Diese Art von Energiespeicherzellen ist durch den erhöhten Innenwiderstand bei tiefen Temperaturen besonders betroffen.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Es zeigen:
- Fig. 1: eine schematische Darstellung eines Systems mit einer Energiespeichereinrichtung gemäß einer Ausführungsform der vorliegenden Erfindung;
- Fig. 2: eine schematische Darstellung eines Ausführungsbeispiels eines Energiespeichermoduls einer Energiespeichereinrichtung nach Fig. 1;
- Fig. 3: eine schematische Darstellung eines weiteren Ausführungsbeispiels eines Energiespeichermoduls einer Energiespeichereinrichtung nach Fig. 1; und
- Fig. 4: eine schematische Darstellung eines Verfahrens zum Aufheizen von Energiespeicherzellen einer Energiespeichereinrichtung in einem System gemäß einer weiteren Ausführungsform der vorliegenden Erfindung.

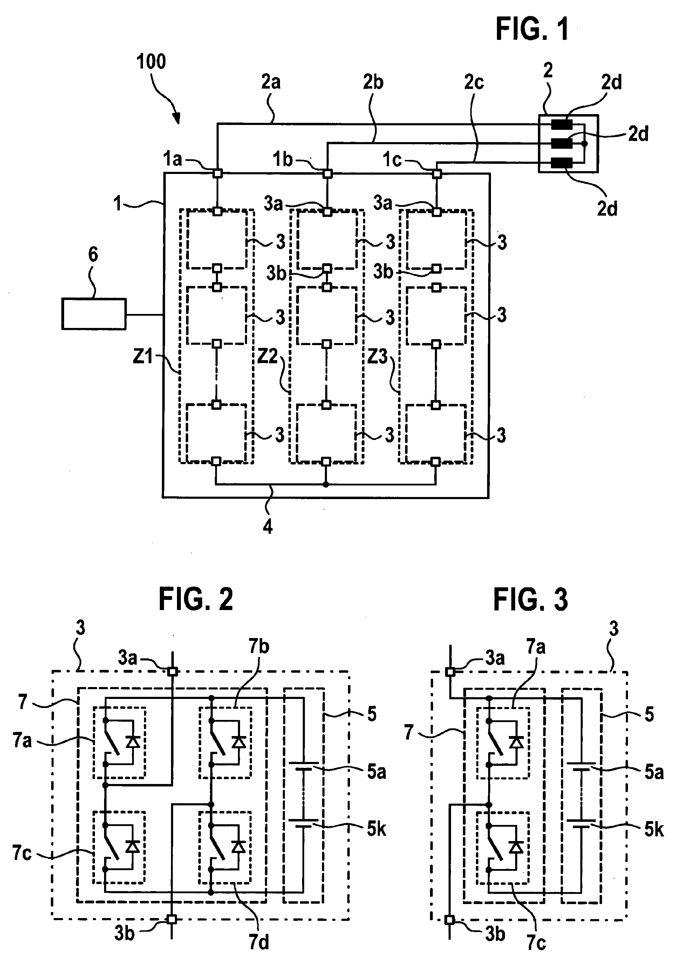

Fig. 1 zeigt ein System 100 zur Spannungswandlung von durch Energiespeichermodule 3 bereitgestellter Gleichspannung in eine n-phasige Wechselspannung. Das System 100 umfasst eine Energiespeichereinrichtung 1 mit Energiespeichermodulen 3, welche in Energieversorgungszweigen in Serie geschaltet sind. Beispielhaft sind in Fig. 1 drei Energieversorgungszweige Z1, Z2 und Z3 gezeigt, welche zur Erzeugung einer dreiphasigen Wechselspannung, beispielsweise für eine Drehstrommaschine, geeignet sind. Es ist jedoch klar, dass jede andere Anzahl an Energieversorgungszweigen ebenso möglich sein kann. Die Energiespeichereinrichtung 1 verfügt an jedem Energieversorgungszweig über einen Ausgangsanschluss 1 a, 1 b, 1 c, welche jeweils an Phasenleitungen 2a, 2b bzw. 2c angeschlossen sind, die die Energiespeichereinrichtung 1 mit einer elektrischen Maschine 2 koppeln. Beispielhaft dient das System 100 in Fig. 1 zur Speisung einer elektrischen Maschine 2. Es kann jedoch auch vorgesehen sein, dass die Energiespeichereinrichtung 1 zur Erzeugung von elektrischem Strom für ein Energieversorgungsnetz 2 verwendet wird.

Das System 100 kann weiterhin eine Steuereinrichtung 6 umfassen, welche mit der Energiespeichereinrichtung 1 verbunden ist, und mithilfe derer die Energiespeichereinrichtung 1 gesteuert werden kann, um die gewünschten Ausgangsspannungen an den jeweiligen Ausgangsanschlüssen 1a, 1b, 1c bereitzustellen.

Die Energieversorgungszweige Z1, Z2 und Z3 können an ihrem Ende mit einem Bezugspotential 4 (Bezugsschiene) verbunden werden. Diese kann in Bezug auf die Phasenleitungen 2a, 2b, 2c der elektrischen Maschine 2 ein mittleres Potential führen und beispielsweise mit einem Massepotential verbunden werden. Jeder der Energieversorgungszweige Z1, Z2 und Z3 weist mindestens zwei in Reihe geschaltete Energiespeichermodule 3 auf. Beispielhaft beträgt die Anzahl der Energiespeichermodule 3 pro Energieversorgungszweig in Fig. 1 drei, wobei jedoch jede andere Anzahl von Energiespeichermodulen 3 ebenso möglich ist. Vorzugsweise umfasst dabei jeder der Energieversorgungszweige Z1, Z2 und Z3 die gleiche Anzahl an Energiespeichermodulen 3, wobei es jedoch auch möglich ist, für jeden Energieversorgungszweig Z1, Z2 und Z3 eine unterschiedliche Anzahl an Energiespeichermodulen 3 vorzusehen.

Die Energiespeichermodule 3 weisen jeweils zwei Ausgangsanschlüsse 3a und 3b auf, über welche eine Ausgangsspannung der Energiespeichermodule 3 bereitgestellt werden kann.

Beispielhafter Aufbauformen der Energiespeichermodule 3 sind in den Fig. 2 und 3 in größerem Detail gezeigt. Die Energiespeichermodule 3 umfassen jeweils eine Koppeleinrichtung 7 mit mehreren Koppelelementen 7a und 7c sowie gegebenenfalls 7b und 7d. Die Energiespeichermodule 3 umfassen weiterhin jeweils ein Energiespeicherzellenmodul 5 mit einem oder mehreren in Reihe geschalteten Energiespeicherzellen 5a, 5k.

Das Energiespeicherzellenmodul 5 kann dabei beispielsweise in Reihe geschaltete Batterien 5a bis 5k, beispielsweise Lithium-Ionen-Batterien oder -Akkumulatoren aufweisen. Dabei beträgt die Anzahl der Energiespeicherzellen 5a bis 5k in dem in Fig. 2 gezeigten Energiespeichermodul 3 beispielhaft zwei, wobei jedoch jede andere Zahl von Energiespeicherzellen 5a bis 5k ebenso möglich ist.

Die Energiespeicherzellenmodule 5 sind über Verbindungsleitungen mit Eingangsanschlüssen der zugehörigen Koppeleinrichtung 7 verbunden. Die Koppeleinrichtung 7 ist in Fig. 2 beispielhaft als Vollbrückenschaltung mit je zwei Koppelelementen 7a, 7c und zwei Koppelelementen 7b, 7d ausgebildet. Die Koppelelemente 7a, 7b, 7c, 7d können dabei jeweils ein aktives Schaltelement, beispielsweise einen Halbleiterschalter, und eine dazu parallel geschaltete Freilaufdiode aufweisen. Die Halbleiterschalter können beispielsweise Feldeffekttransistoren (FETs) aufweisen. In diesem Fall können die Freilaufdioden auch jeweils in die Halbleiterschalter integriert sein.

Die Koppelelemente 7a, 7b, 7c, 7d in Fig. 2 können derart angesteuert werden, beispielsweise mithilfe der Steuereinrichtung 6 in Fig. 1, dass das Energiespeicherzellenmodul 5 selektiv zwischen die Ausgangsanschlüsse 3a und 3b geschaltet wird oder dass das Energiespeicherzellenmodul 5 überbrückt wird. Beispielsweise kann das Energiespeicherzellenmodul 5 in Vorwärtsrichtung zwischen die Ausgangsanschlüsse 3a und 3b geschaltet werden, indem das Koppelelement 7d rechts unten und das Koppelelement 7a links oben in einen geschlossenen Zustand versetzt werden, während die beiden übrigen Koppelelemente in einen offenen Zustand versetzt werden. Ein Überbrückungszustand kann beispielsweise dadurch eingestellt werden, indem die beiden Koppelelemente 7a und 7b in geschlossenen Zustand versetzt werden, während die beiden Koppelelemente 7c und 7d in offenem Zustand gehalten werden.

Durch geeignetes Ansteuern der Koppeleinrichtungen 7 können daher einzelne Energiespeicherzellenmodule 5 der Energiespeichermodule 3 gezielt in die Reihenschaltung eines Energieversorgungszweigs Z1 bis Z3 integriert werden.

Fig. 3 zeigt eine weitere beispielhafte Ausführungsform eines Energiespeichermoduls 3. Das in Fig. 3 gezeigte Energiespeichermodul 3 unterscheidet sich von dem in Fig. 2 gezeigten Energiespeichermodul 3 nur dadurch, dass die Koppeleinrichtung 7 zwei statt vier Koppelelemente aufweist, die in Halbbrückenschaltung statt in Vollbrückenschaltung verschaltet sind.

In den dargestellten Ausführungsvarianten können die aktiven Schaltelemente als Leistungshalbleiterschalter, zum Beispiel in Form von IGBTs (Insulated Gate Bipolar Transistors), JFETs (Junction Field-Effect Transistors) oder als MOSFETs (Metal Oxide Semiconductor Field-Effect Transistors), ausgeführt sein.

Mit den Koppelelementen 7a, 7b, 7c, 7d kann die Ausgangsspannung jedes der Energieversorgungszweige Z1 bis Z3 über eine geeignete Ansteuerung in Stufen von einem negativen Maximalwert bis hin zu einem positiven Maximalwert variiert werden. Die Abstufung der Spannungslevel ergibt sich hierbei in Abhängigkeit von der Stufung der einzelnen Energiespeicherzellenmodule 5. Um beispielsweise einen mittleren Spannungswert zwischen zwei durch die Stufung der Energiespeicherzellenmodule 5 vorgegebenen Spannungsstufen zu erhalten, können die Koppelelemente 7a, 7b, 7c, 7d eines Energiespeichermoduls 3 getaktet angesteuert werden, beispielsweise in einer Pulsbreitenmodulation (PWM), so dass das betreffende Energiespeichermodul 3 im zeitlichen Mittel eine Modulspannung liefert, welche einen Wert zwischen Null und der durch die Energiespeicherzellen 5a bis 5k bestimmten, maximal möglichen Modulspannung aufweisen kann. Die Ansteuerung der Koppelelemente 7a, 7b, 7c, 7d kann dabei beispielsweise eine Steuereinrichtung, wie die Steuereinrichtung 6 in Fig. 1, vornehmen, welche dazu ausgelegt ist, zum Beispiel eine Stromregelung mit einer untergelagerten Spannungssteuerung durchzuführen, so dass ein stufiges Zu- oder Abschalten von einzelnen Energiespeichermodulen 3 erfolgen kann.

Durch den Einsatz einer derartigen Energiespeichereinrichtung 1 ist es möglich, eine n-phasige Versorgungsspannung, beispielsweise für eine elektrische Maschine 2 bereitzustellen. Dazu können Phasenleitungen 2a, 2b, 2c mit jeweiligen der Ausgangsanschlüsse 1a, 1b, 1c verbunden werden, wobei die Phasenleitungen 2a, 2b, 2c ihrerseits mit Phasenanschlüssen der elektrischen Maschine 2 verbunden werden können. Beispielsweise kann die elektrische Maschine 2 eine dreiphasige elektrische Maschine sein, zum Beispiel eine dreiphasige Drehfeldmaschine, die über der Maschine 2 interne Induktivitäten 2d verfügt.

Der Innenwiderstand der Energiespeicherzellen 5a bis 5k ist temperaturabhängig: Bei Lithium-Ionen-Akkumulatoren kann der Innenwiderstand bei einer Temperatur von -10°C bis zu zehnfach gegenüber dem Innenwiderstand bei einer Temperatur von +25°C erhöht sein. Dadurch kann die Leistungsfähigkeit der Energiespeicherzellen 5a bis 5k stark sinken. Besonders für Situationen in elektrischen Antriebssystemen, in denen hohe Ströme erforderlich sind, beispielsweise Anfahrsituationen von elektrisch betriebenen Fahrzeugen, ist es wünschenswert, aufgrund der hohen Strombelastung Energiespeicherzellen 5a bis 5k mit einem niedrigen Innenwiderstand zur Versorgung der elektrischen Maschine 2 einzusetzen.

Um es zu vermeiden, dass aufwändige, kostenintensive, platzraubende und/oder schwere Heizelemente oder Heizungen für die Energiespeicherzellen 5a bis 5k vorgesehen werden müssen, kann der Umstand ausgenutzt werden, dass bei einem Transfer von elektrischer Energie von einem Energiespeichermodul 3 eines Energieversorgungszweigs in ein Energiespeichermodul 3 eines anderen Energieversorgungszweigs durch die Strombelastung eine Verlustleistung in Form von Abwärme auftritt. Diese Abwärme kann dazu genutzt werden, um die betreffenden Energiespeichermodule 3 lokal und temporär aufzuheizen. Für diese Art der Aufheizung sind keine zusätzlichen Heizkomponenten mehr nötig, da lediglich eine bestimmte Ansteuerstrategie für die Koppeleinrichtungen 7 gewählt werden muss, um elektrische Energie zwischen zwei Energiespeichermodulen 3 hin und her zu transferieren.

Dabei ist zu beachten, dass im Rahmen der Energietransfervorgänge kein unerwünschtes Drehmoment in der elektrischen Maschine 2 erzeugt wird. Vorzugsweise kann das Transferieren von elektrischer Energie nur über kurze Zeiträume erfolgt, das heißt, dass für den Transfer zwischen den Energiespeichermodulen 3 nur hochfrequente Wechselströme genutzt werden, deren Frequenz oberhalb einer festlegbaren Frequenzgrenze liegt. Zusätzlich oder alternativ kann bei einem Stillstand der elektrischen Maschine 2 auch eine Getriebesperrklinke aktiviert werden, um die elektrische Maschine 2 und damit das elektrisch betriebene Fahrzeug an unerwünschten Bewegungen zu hindern. Die Aufheizung der Energiespeicherzellen 5a bis 5k kann auf diese Weise auch während eines gewöhnlichen Betriebs des Systems 100 erfolgen, indem ein hochfrequenter Umladestrom über den niederfrequenteren Betriebsstrom überlagert wird.

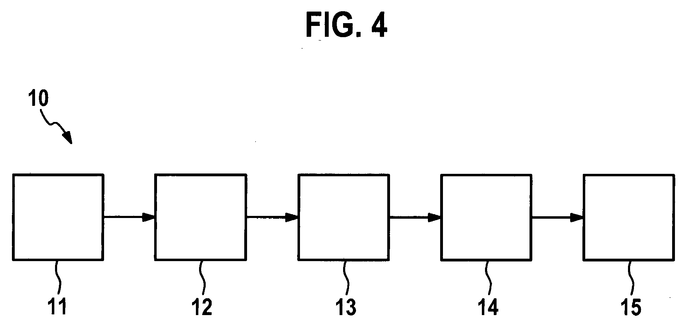

Fig. 4 zeigt eine schematische Darstellung eines Verfahrens 10 zum Aufheizen von Energiespeicherzellen einer Energiespeichereinrichtung, beispielsweise von Energiespeicherzellen 5a bis 5k der Energiespeichereinrichtung 1 in Fig. 1. Das Verfahren 10 eignet sich insbesondere für den Einsatz in elektrisch betriebenen Fahrzeugen, welche einen Elektromotor als elektrische Maschine 2 aufweisen. In derartigen Fahrzeugen eingesetzte Energiespeichereinrichtungen 1 mit Energiespeicherzellen 5a bis 5k sind beispielsweise im Winter oder nachts tiefen Temperaturen ausgesetzt, so dass ein Starten des elektrisch betriebenen Fahrzeugs mit dem Verfahren 10 beschleunigt und vereinfacht wird. Durch das hochfrequente Umladen von Energie zwischen Energiespeicherzellen der Energiespeichereinrichtung 1 können die beteiligten Energiespeicherzellen durch die dabei entstehende Ladeverlustleistung aufgeheizt werden, so dass deren Innenwiderstand sinkt und deren Leistungsfähigkeit damit verbessert wird. Das Verfahren 10 kann dabei vorzugsweise ausgeführt werden, wenn die Temperatur der Energiespeicherzellen einen ersten vorbestimmten Grenzwert unterschreitet. Dieser erste vorbestimmte Grenzwert kann sich beispielsweise an einer Temperatur orientieren, unterhalb derer der Innenwiderstand der Energiespeicherzellen der Energiespeichereinrichtung 1 einen maximal zulässigen bzw. erwünschten Wert überschreitet.

Das Verfahren 10 kann als ersten Schritt 11 ein Verbinden der Ausgangsanschlüsse 1a, 1b, 1c der Energiespeichereinrichtung 1 mit Eingangsanschlüssen einer n-phasigen elektrischen Maschine 2 und ein Koppeln der Ausgangsanschlüsse 1a, 1 b, 1c über den Sternpunkt der elektrischen Maschine 2 umfassen. In gewöhnlichen elektrischen Antriebssystemen mit einer Drehstrommaschine 2 ist dies ohnehin bereits der Fall. Daraufhin kann in einem zweiten Schritt 12 ein Ansteuern 12 der Koppeleinrichtungen 7 mindestens eines Energiespeichermoduls 3 eines ersten Energieversorgungszweigs Z1 bis Z3 zum Schalten der jeweiligen Energiespeicherzellenmodule 5 in den ersten Energieversorgungszweig Z1 bis Z3 erfolgen. Wenn in einem Schritt 13 dann ein gleichzeitiges Ansteuern der Koppeleinrichtungen 7 mindestens eines Energiespeichermoduls 3 eines zweiten Energieversorgungszweigs Z1 bis Z3 zum Schalten der jeweiligen Energiespeicherzellenmodule 5 in den zweiten Energieversorgungszweig Z1 bis Z3 erfolgt, besteht ein Stromkreis durch die jeweiligen Energiespeichermodule 3 des ersten Energieversorgungszweigs Z1 bis Z3, die elektrische Maschine 2, den Sternpunkt der elektrischen Maschine, zurück in die Energiespeichereinrichtung 1 durch die jeweiligen Energiespeichermodule 3 des zweiten Energieversorgungszweigs Z1 bis Z3 und die Bezugspotentialschiene 4 hin zu dem ersten Energieversorgungszweig Z1 bis Z3.

Dieser Zustand kann für eine erste vorbestimmte Zeitspanne aufrechterhalten werden, so dass elektrische Energie von den jeweiligen Energiespeichermodulen 3 des ersten Energieversorgungszweigs Z1 bis Z3 in die jeweiligen Energiespeichermodule 3 des zweiten Energieversorgungszweigs Z1 bis Z3 transferiert werden kann. Wenn die erste vorbestimmte Zeitspanne so gewählt wird, dass sie kürzer als der Quotient aus Induktivität und Ohm'schen Widerstand der induktiven Komponenten 2d der elektrischen Maschine 2 ist, dienen die induktiven Komponenten 2d der elektrischen Maschine 2 gewissermaßen als Zwischenspeicher für die aus dem ersten Energieversorgungszweig Z1 bis Z3 entnommene elektrische Energie. Nach dem Verstreichen der ersten vorbestimmten Zeitspanne sollte in einem Schritt 14 ein Ansteuern der Koppeleinrichtungen 7 des mindestens einen Energiespeichermoduls 3 des zweiten Energieversorgungszweigs Z1 bis Z3 zum Überbrücken der jeweiligen Energiespeicherzellenmodule 5 in dem zweiten Energieversorgungszweig Z1 bis Z3 für eine zweite vorbestimmte Zeitspanne erfolgen. Dadurch können die induktiven Komponenten 2d der elektrischen Maschine 2 wieder aufgeladen werden. Auch die zweite vorbestimmte Zeitspanne kann hinreichend kurz sein, so dass keine unerwünschten Drehmomente in der elektrischen Maschine 2 auftreten.

Die Schritte 13 und 14 können dabei so lange alterniert werden, bis die Temperatur der Energiespeicherzellen 5a, 5k der beteiligten Energiespeichermodule 3 einen zweiten vorbestimmten Grenzwert überschreitet. Dieser zweite vorbestimmte Grenzwert kann sich beispielsweise an einer Temperatur orientieren, oberhalb derer der Innenwiderstand der Energiespeicherzellen 5a, 5k der Energiespeichereinrichtung 1 einen erwünschten Wert unterschreitet.

In einem Schritt 15 kann dann ein Auswählen des mindestens einen Energiespeichermoduls 3 des ersten Energieversorgungszweigs Z1 bis Z3 und des mindestens einen Energiespeichermoduls 3 des zweiten Energieversorgungszweigs Z1 bis Z3 zum Bereitstellen der n-phasigen Versorgungsspannung für die elektrische Maschine 2 erfolgen. Insbesondere in einer Betriebssituation, die nur eine geringe Eingangsspannung für die elektrische Maschine 2 erfordert, beispielsweise einem Anfahren eines elektrischen Fahrzeugs, können gezielt diejenigen Energiespeichermodule 3 ausgewählt werden, die bereits aufgeheizt worden sind, um die n-phasige Versorgungsspannung für die elektrische Maschine 2 bereitzustellen. Erst in einem späteren Betriebsstadium werden dann die übrigen Energiespeichermodule 3 zugeschaltet, beispielsweise wenn ein späteres Aufheizen dieser Energiespeichermodule 3 erfolgt ist, sei es durch ein Aufheizen mithilfe des Verfahrens 10 oder ein automatisches Aufheizen durch den Fahrbetrieb des elektrisch betriebenen Fahrzeugs.

## Patentansprüche

1. Verfahren (10) zum Aufheizen von Energiespeicherzellen (5a, 5k) einer Energiespeichereinrichtung (1), welche zum Erzeugen einer n-phasigen Versorgungsspannung ausgelegt ist, wobei n ≥ 2, und welche n parallel geschaltete Energieversorgungszweige (Z1; Z2; Z3) aufweist, welche jeweils zwischen einen Ausgangsanschluss (1a, 1b, 1c) und eine Bezugspotentialschiene (4) gekoppelt sind, wobei jeder der Energieversorgungszweige (Z1; Z2; Z3) eine Vielzahl von in Serie geschalteten Energiespeichermodulen (3) aufweist, welche jeweils umfassen:
ein Energiespeicherzellenmodul (5), welches mindestens eine Energiespeicherzelle (5a, 5k) aufweist, und
eine Koppeleinrichtung (7) mit Koppelelementen (7a; ...; 7d), welche dazu ausgelegt sind, das Energiespeicherzellenmodul (5) selektiv in den jeweiligen Energieversorgungszweig (Z1; Z2; Z3) zu schalten oder zu überbrücken,
wobei das Verfahren (10) die Schritte aufweist:
Verbinden (11) der Ausgangsanschlüsse (1a, 1b, 1c) der Energiespeichereinrichtung (1) mit Eingangsanschlüssen einer n-phasigen elektrischen Maschine (2) und Koppeln der Ausgangsanschlüsse (1a, 1b, 1c) über den Sternpunkt der elektrischen Maschine (2);
Ansteuern (12) der Koppeleinrichtungen (7) mindestens eines Energiespeichermoduls (3) eines ersten Energieversorgungszweigs (Z1; Z2; Z3) zum Schalten der jeweiligen Energiespeicherzellenmodule (5) in den ersten Energieversorgungszweig (Z1; Z2; Z3); und
gleichzeitiges Ansteuern (13) der Koppeleinrichtungen (7) mindestens eines Energiespeichermoduls (3) eines zweiten Energieversorgungszweigs (Z1; Z2; Z3) zum Schalten der jeweiligen Energiespeicherzellenmodule (5) in den zweiten Energieversorgungszweig (Z1; Z2; Z3) für eine erste vorbestimmte Zeitspanne.

2. Verfahren (10) nach Anspruch 1, weiterhin mit dem Schritt:
Ansteuern (14) der Koppeleinrichtungen (7) des mindestens einen Energiespeichermoduls (3) des zweiten Energieversorgungszweigs (Z1; Z2; Z3) zum Überbrücken der jeweiligen Energiespeicherzellenmodule (5) in dem zweiten Energieversorgungszweig (Z1; Z2; Z3) für eine zweite vorbestimmte Zeitspanne, nachdem die erste vorbestimmte Zeitspanne verstrichen ist.

3. Verfahren (10) nach einem der Ansprüche 1 und 2, wobei die erste vorbestimmte Zeitspanne kürzer als der Quotient aus Induktivität und Ohm'schen Widerstand der induktiven Komponenten (2d) der elektrischen Maschine (2) ist.

4. Verfahren (10) nach einem der Ansprüche 1 bis 3, weiterhin mit dem Schritt:
Auswählen (15) des mindestens einen Energiespeichermoduls (3) des ersten Energieversorgungszweigs (Z1; Z2; Z3) und des mindestens einen Energiespeichermoduls (3) des zweiten Energieversorgungszweigs (Z1; Z2; Z3) zum Bereitstellen der n-phasigen Versorgungsspannung für die elektrische Maschine (2).

5. Verfahren (10) nach einem der Ansprüche 1 bis 4, wobei das Verfahren (10) ausgeführt wird, wenn die Temperatur der Energiespeicherzellen (5a, 5k) einen ersten vorbestimmten Grenzwert unterschreitet.

6. Verfahren (10) nach einem der Ansprüche 1 bis 5, wobei die Schritte des Ansteuerns (13) der Koppeleinrichtungen (7) des mindestens einen Energiespeichermoduls (3) des zweiten Energieversorgungszweigs (Z1; Z2; Z3) zum Schalten der jeweiligen Energiespeicherzellenmodule (5) in den zweiten Energieversorgungszweig (Z1; Z2; Z3) und des Ansteuerns (14) der Koppeleinrichtungen (7) des mindestens einen Energiespeichermoduls (3) des zweiten Energieversorgungszweigs (Z1; Z2; Z3) zum Überbrücken der jeweiligen Energiespeicherzellenmodule (5) in dem zweiten Energieversorgungszweig (Z1; Z2; Z3) so lange alterniert werden, bis die Temperatur der Energiespeicherzellen (5a, 5k) der beteiligten Energiespeichermodule (3) einen zweiten vorbestimmten Grenzwert überschreitet.

7. System (100), mit:
einer n-phasigen elektrischen Maschine (2), wobei n ≥ 2;
einer Energiespeichereinrichtung (1), welche zum Erzeugen einer n-phasigen Versorgungsspannung ausgelegt ist, wobei n ≥ 2, und welche n parallel geschaltete Energieversorgungszweige (Z1; Z2; Z3) aufweist, welche jeweils zwischen einen Ausgangsanschluss (1a, 1b, 1c) und eine Bezugspotentialschiene (4) gekoppelt sind,
wobei jeder der Energieversorgungszweige (Z1; Z2; Z3) eine Vielzahl von in Serie geschalteten Energiespeichermodulen (3) aufweist, welche jeweils umfassen:
ein Energiespeicherzellenmodul (5), welches mindestens eine Energiespeicherzelle (5a, 5n) aufweist, und
eine Koppeleinrichtung (9) mit Koppelelementen (7, 8), welche dazu ausgelegt sind, das Energiespeicherzellenmodul (5) selektiv in den jeweiligen Energieversorgungszweig (Z1; Z2; Z3) zu schalten oder zu überbrücken;
n Phasenleitungen (2a, 2b, 2c), welche jeweils einen der Ausgangsanschlüsse (1a, 1b, 1c) der Energiespeichereinrichtung (1) mit jeweils einem von n Phasenanschlüssen der n-phasigen elektrischen Maschine (2) koppeln; und
einer Steuereinrichtung (6), welche dazu ausgelegt ist, ein Verfahren nach einem der Ansprüche 1 bis 6 durchzuführen.

8. System (100) nach Anspruch 7, wobei die Koppeleinrichtungen (7) Koppelelemente (7a; 7b; 7c; 7d) in Vollbrückenschaltung umfassen.

9. System (100) nach Anspruch 7, wobei die Koppeleinrichtungen (7) Koppelelemente (7a; 7c) in Halbbrückenschaltung umfassen.

10. System (100) nach einem der Ansprüche 7 bis 9, wobei die Energiespeicherzellen (5a, 5k) Lithium-Ionen-Akkumulatoren umfassen.

## Claims

1. Method (10) for heating energy storage cells (5a, 5k) of an energy storage device (1), which is configured to generate an n-phase supply voltage, wherein n ≥ 2, and which has n parallel-connected energy supply branches (Z1; Z2; Z3) which are in each case coupled between an output connection (1a, 1b, 1c) and a reference potential rail (4), wherein each of the energy supply branches (Z1; Z2; Z3) has a multiplicity of series-connected energy storage modules (3), which in each case comprise:
an energy storage cell module (5) which has at least one energy storage cell (5a, 5k), and
a coupling device (7) with coupling elements (7a; ...; 7d) which are configured to selectively switch the energy storage cell module (5) into the respective energy supply branch (Z1; Z2; Z3) or to bypass it,
wherein the method (10) has the steps of:
connecting (11) the output connections (1a, 1b, 1c) of the energy storage device (1) to input connections of an n-phase electric machine (2) and coupling the output connections (1a, 1b, 1c) via the neutral point of the electric machine (2);
actuating (12) the coupling devices (7) of at least one energy storage module (3) of a first energy supply branch (Z1; Z2; Z3) to switch the respective energy storage cell modules (5) into the first energy supply branch (Z1; Z2; Z3);
and,
at the same time, actuating (13) the coupling devices (7) of at least one energy storage module (3) of a second energy supply branch (Z1; Z2; Z3) to switch the respective energy storage cell modules (5) into the second energy supply branch (Z1; Z2; Z3) for a first predetermined time period.

2. Method (10) according to Claim 1, also having the step of:
actuating (14) the coupling devices (7) of the at least one energy storage module (3) of the second energy supply branch (Z1; Z2; Z3) to bypass the respective energy storage cell modules (5) in the second energy supply branch (Z1; Z2; Z3) for a second predetermined time period, after the first predetermined time period has elapsed.

3. Method (10) according to either of Claims 1 and 2, wherein the first predetermined time period is shorter than the quotient of inductance and nonreactive resistance of the inductive components (2d) of the electric machine (2).

4. Method (10) according to any of Claims 1 to 3, also having the step of:
selecting (15) the at least one energy storage module (3) of the first energy supply branch (Z1; Z2; Z3) and the at least one energy storage module (3) of the second energy supply branch (Z1; Z2; Z3) to provide the n-phase supply voltage for the electric machine (2).

5. Method (10) according to any of Claims 1 to 4, wherein the method (10) is performed if the temperature of the energy storage cells (5a, 5k) falls below a first predetermined limit value.

6. Method (10) according to any of Claims 1 to 5, wherein the steps of actuating (13) the coupling devices (7) of the at least one energy storage module (3) of the second energy supply branch (Z1; Z2; Z3) to switch the respective energy storage cell modules (5) into the second energy supply branch (Z1; Z2; Z3) and of actuating (14) the coupling devices (7) of the at least one energy storage module (3) of the second energy supply branch (Z1; Z2; Z3) to bypass the respective energy storage cell modules (5) in the second energy supply branch (Z1; Z2; Z3) are alternated until the temperature of the energy storage cells (5a, 5k) of the energy storage modules (3) in question exceeds a second predetermined limit value.

7. System (100), having:
an n-phase electric machine (2), wherein n ≥ 2;
an energy storage device (1), which is configured to generate an n-phase supply voltage, wherein n ≥ 2, and which has n parallel-connected energy supply branches (Z1; Z2; Z3) which are in each case coupled between an output connection (1a, 1b, 1c) and a reference potential rail (4), wherein each of the energy supply branches (Z1; Z2; Z3) has a multiplicity of series-connected energy storage modules (3), which in each case comprise:
an energy storage cell module (5) which has at least one energy storage cell (5a, 5n), and
a coupling device (9) with coupling elements (7, 8) which are configured to selectively switch the energy storage cell module (5) into the respective energy supply branch (Z1; Z2; Z3) or to bypass it;
n phase lines (2a, 2b, 2c), which in each case couple one of the output connections (1a, 1b, 1c) of the energy storage device (1) to in each case one of n phase connections of the n-phase electric machine (2) ; and
a control device (6), which is configured to perform a method according to any of Claims 1 to 6.

8. System (100) according to Claim 7, wherein the coupling devices (7) comprise coupling elements (7a; 7b; 7c; 7d) in a full-bridge circuit.

9. System (100) according to Claim 7, wherein the coupling devices (7) comprise coupling elements (7a; 7c) in a half-bridge circuit.

10. System (100) according to any of Claims 7 to 9, wherein the energy storage cells (5a, 5k) comprise lithium-ion rechargeable batteries.

## Revendications

1. Procédé (10) pour chauffer des cellules d'accumulation d'énergie (5a, 5k) d'un dispositif d'accumulation d'énergie (1) qui est conçu pour générer une tension d'alimentation à n phases, avec n ≥ 2, et qui possède n branches d'alimentation en énergie (Z1 ; Z2 ; Z3) branchées en parallèle, lesquelles sont respectivement connectées entre une borne de sortie (1a, 1b, 1c) et une barre-bus de potentiel de référence (4), chacune des branches d'alimentation en énergie (Z1 ; Z2 ; Z3) possédant une pluralité de modules d'accumulation d'énergie (3) branchés en série qui comprennent respectivement :
un module à cellule d'accumulation d'énergie (5) qui possède au moins une cellule d'accumulation d'énergie (5a, 5k), et
un dispositif de connexion (7) comprenant des éléments de connexion (7a ; ... ; 7d) qui sont conçus pour commuter le module à cellule d'accumulation d'énergie (5) sélectivement dans la branche d'alimentation en énergie (Z1 ; Z2 ; Z3) respective ou le ponter, le procédé (10) comprenant les étapes suivantes :
raccordement (11) des bornes de sortie (1a, 1b, 1c) du dispositif d'accumulation d'énergie (1) aux bornes d'entrée d'une machine électrique (2) à n phases et connexion des bornes de sortie (1a, 1b, 1c) par le biais du point neutre de la machine électrique (2) ;
commande (12) des dispositifs de connexion (7) d'au moins un module d'accumulation d'énergie (3) d'une première branche d'alimentation en énergie (Z1 ; Z2 ; Z3) pour commuter le module à cellule d'accumulation d'énergie (5) respectif dans la première branche d'alimentation en énergie (Z1 ; Z2 ; Z3) ; et
commande simultanée (13) des dispositifs de connexion (7) d'au moins un module d'accumulation d'énergie (3) d'une deuxième branche d'alimentation en énergie (Z1 ; Z2 ; Z3) pour commuter le module à cellule d'accumulation d'énergie (5) respectif dans la deuxième branche d'alimentation en énergie (Z1 ; Z2 ; Z3) pendant un premier intervalle de temps prédéfini.

2. Procédé (10) selon la revendication 1, comprenant en outre l'étape :
commande (14) des dispositifs de connexion (7) de l'au moins un module d'accumulation d'énergie (3) de la deuxième branche d'alimentation en énergie (Z1 ; Z2 ; Z3) pour ponter les modules à cellule d'accumulation d'énergie (5) respectifs dans la deuxième branche d'alimentation en énergie (Z1 ; Z2 ; Z3) pendant un deuxième intervalle de temps prédéfini après écoulement du premier intervalle de temps prédéfini.

3. Procédé (10) selon l'une des revendications 1 et 2, selon lequel l'intervalle de temps prédéfini est plus court que le quotient de l'inductance et de la résistance ohmique des composants inductifs (2d) de la machine électrique (2).

4. Procédé (10) selon l'une des revendications 1 à 3, comprenant en outre l'étape suivante :
sélection (15) de l'au moins un module d'accumulation d'énergie (3) de la première branche d'alimentation en énergie (Z1 ; Z2 ; Z3) et de l'au moins un module d'accumulation d'énergie (3) de la deuxième branche d'alimentation en énergie (Z1 ; Z2 ; Z3) en vue de délivrer une tension d'alimentation électrique à n phases pour la machine électrique (2).

5. Procédé (10) selon l'une des revendications 1 à 4, selon lequel le procédé (10) est mis en oeuvre lorsque la température des cellules d'accumulation d'énergie (5a, 5k) devient inférieure à une première valeur de seuil prédéfinie.

6. Procédé (10) selon l'une des revendications 1 à 5, selon lequel les étapes de commande (13) des dispositifs de connexion (7) de l'au moins un module d'accumulation d'énergie (3) de la deuxième branche d'alimentation en énergie (Z1 ; Z2 ; Z3) pour commuter le module à cellule d'accumulation d'énergie (5) respectif dans la deuxième branche d'alimentation en énergie (Z1 ; Z2 ; Z3) et de commande (14) des dispositifs de connexion (7) de l'au moins un module d'accumulation d'énergie (3) de la deuxième branche d'alimentation en énergie (Z1 ; Z2 ; Z3) pour ponter les modules à cellule d'accumulation d'énergie (5) respectifs dans la deuxième branche d'alimentation en énergie (Z1 ; Z2 ; Z3) sont alternées jusqu'à ce que la température des cellules d'accumulation d'énergie (5a, 5k) des modules d'accumulation d'énergie (3) participants devient supérieure à une deuxième valeur de seuil prédéfinie.

7. Système (100) comprenant :
une machine électrique (2) à n phases, avec n ≥ 2 ;
un dispositif d'accumulation d'énergie (1) qui est conçu pour générer une tension d'alimentation à n phases, avec n ≥ 2, et qui possède n branches d'alimentation en énergie (Z1 ; Z2 ; Z3) branchées en parallèle, lesquelles sont respectivement connectées entre une borne de sortie (1a, 1b, 1c) et une barre-bus de potentiel de référence (4), chacune des branches d'alimentation en énergie (Z1 ; Z2 ; Z3) possédant une pluralité de modules d'accumulation d'énergie (3) branchés en série qui comprennent respectivement :
un module à cellule d'accumulation d'énergie (5) qui possède au moins une cellule d'accumulation d'énergie (5a, 5n), et
un dispositif de connexion (9) comprenant des éléments de connexion (7, 8) qui sont conçus pour commuter le module à cellule d'accumulation d'énergie (5) sélectivement dans la branche d'alimentation en énergie (Z1 ; Z2 ; Z3) respective ou le ponter ;
n lignes de phase (2a, 2b, 2c) qui connectent respectivement l'une des bornes de sortie (1a, 1b, 1c) du dispositif d'accumulation d'énergie (1) à respectivement l'une parmi n bornes de phase de la machine électrique (2) à n phases ; et
un dispositif de commande (6) qui est conçu pour mettre en oeuvre un procédé selon l'une des revendications 1 à 6.

8. Système (100) selon la revendication 7, avec lequel les dispositifs de connexion (7) comprennent des éléments de connexion (7a ; 7b ; 7c ; 7d) dans un circuit en pont complet.

9. Système (100) selon la revendication 7, avec lequel les dispositifs de connexion (7) comprennent des éléments de connexion (7a ; 7c) dans un circuit en demi-pont.

10. Système (100) selon l'une des revendications 7 à 9, avec lequel les cellules d'accumulation d'énergie (5a, 5k) comprennent des accumulateurs au lithium-ion.
